# EUROPEAN PATENT APPLICATION

(11) **EP 4 438 698 A1**
(43) Date of publication of application: **02.10.2024**
(21) Application number: 24166854.0
(22) Date of filing: 27.03.2024
(51) Int. Cl.: C10G 65/10

(54) **HYDROCRACKING SYSTEM, METHOD FOR REDUCING PRESSURE AND PRESSURE REDUCING ASSEMBLY**

(30) Priority: 30.03.2023 RU 2023107818
(71) Applicant: TAIF Joint-Stock Company, 420012 Kazan (RU)
(72) Inventor: SHIGABUTDINOV, Albert Kashafovich, 420015 Kazan (RU); PRESNYAKOV, Vladimir Vasilievich, 420081 Kazan (RU); SHIGABUTDINOV, Ruslan Albertovich, 420081 Kazan (RU); AKHUNOV, Rustem Nazyifovich, 420140 Kazan (RU); IDRISOV, Marat Rinatovich, 420081 Kazan (RU); NOVIKOV, Maksim Anatolievich, 423548 Nizhnekamsk (RU); KHRAMOV, Aleksei Aleksandrovich, 423582 Nizhnekamsk (RU); KONOVNIN, Andrei Aleksandrovich, 423584 Nizhnekamsk (RU); URAZAIKIN, Artur Semenovich, 423571 Nizhnekamsk (RU); SUBRAMANIAN, Viswanathan Anand, Sugar Land, 77479 (US)
(74) Representative: Hannke Bittner & Partner mbB Regensburg

(57) **Abstract**

The invention relates to the field of processing petroleum products and more particularly to processes of hydroconversion and hydrocracking. A hydrocracking system for petroleum feedstock comprises a liquid-phase hydrocracking (LPH) section that comprises at least one LPH reactor; a gas-phase hydrocracking (GPH) section that comprises at least one GPH reactor; a separation section between the LPH section and the GPH section, comprising at least one high-pressure separator and at least one low-pressure separator; at least one stream supply line from the high-pressure separator to the low-pressure separator, wherein said at least one stream supply line comprises a reducing valve and a throttling cartridge arranged in the supply line downstream of the reducing valve; a heat-transfer medium feed line to the stream supply line and the pressure reducing valve. The technical result is to provide reliable operation of the hydrocracking system due to the prevention of erosive wear and destruction of the system components in the separation section.

## Description

### TECHNICAL FIELD

The invention relates to the field of processing petroleum products and more particularly to processes of hydroconversion and hydrocracking.

### BACKGROUND

Hydrocracking processes, in particular slurry-phase hydrocracking (SPH), are conducted at high temperatures and pressures. Thus, particularly, according to document RU2504575, the pressure in slurry hydrocracking reactors can reach 24 MPa. In a separation section, which follows an SPH section, a low-pressure separator (called therein "a hot flash drum") is arranged after a hot, high-pressure separator and operates in the range of about 0.7 to about 3.5 MPa.

In systems similar to those disclosed in RU2504575, various reducing devices are used to reduce pressure. One example of such devices is a pressure reducing valve disclosed, for example, in US2012161054, which provides a one-step pressure reduction with a pressure drop across said valve of at least 20 MPa. These pressure drops are harmful to the internal components of the valve and downstream piping.

It should be taken into account that failure of the valve is critical for the functioning of the entire system since it can lead to a shutdown of the process. In addition, destruction of the internal components of the valve increases the risk of leakages, which can lead to the ignition of the working medium if its temperature exceeds the auto-ignition temperature upon release into the environment.

The present invention solves the problem of reliable operation of the hydrocracking system by reducing the risk of erosive wear and destruction of system components in the separation section.

### SUMMARY OF THE INVENTION

According to one aspect of the invention, there is provided a hydrocracking system for petroleum feedstock comprising: a liquid-phase hydrocracking (LPH) section including at least one LPH reactor; a gas-phase hydrocracking (GPH) section including at least one GPH reactor; a separation section between the LPH section and the GPH section, including at least one high-pressure separator and at least one low-pressure separator; at least one stream supply line from the high-pressure separator to the low-pressure separator, wherein said at least one stream supply line comprises a reducing valve and a throttling cartridge arranged in the supply line downstream of the reducing valve; a heat-transfer medium feed line to the stream supply line and the reducing valve.

According to one embodiment of the invention, at least one high-pressure separator operates at a pressure in the range of about 18 MPa to about 24 MPa.

According to one embodiment of the invention, at least one low-pressure separator operates at a pressure in the range of about 1.0 to about 1.4 MPa.

According to one embodiment of the invention, the reducing valve is configured to reduce the stream pressure, wherein a pressure drop across the reducing valve does not exceed 10 MPa.

According to one embodiment of the invention, the stream supply line is further equipped with an electric heater.

According to one embodiment of the invention, the supply line is configured to be heated to temperature T1, and the stream has temperature T2, wherein ΔT=T2-T1 is from about 50 to about 140°C, preferably not more than 110°C, and more preferably not more than 80°C.

According to one embodiment of the invention, the heating of said at least one supply line is provided in a gradual manner, namely, first by an electric heater that heats the supply line to temperature T1', and then by a heat-transfer medium that rises the temperature of the supply line to T1, wherein T1>T1'.

According to one embodiment of the invention, the heat-transfer medium is a liquid heat-transfer medium, and the temperature of heating the line by the heat-transfer medium is T1=320-350°C.

According to one embodiment of the invention, the liquid heat-transfer medium is vacuum gas oil.

According to one embodiment of the invention, the vacuum gas oil is fed through a liquid heat-transfer medium feed line from a fractionation column in a fractionation section arranged downstream of the GPH section.

According to one embodiment of the invention, said at least one supply line comprises an internal coating of a refractory metal carbide, in particular tungsten carbide, zirconium carbide, titanium carbide, most preferably tungsten carbide.

According to one embodiment of the invention, the reducing valve has an internal coating of a refractory metal carbide, in particular tungsten carbide, zirconium carbide, titanium carbide, most preferably tungsten carbide.

According to one embodiment of the invention, the throttling cartridge comprises a set of throttling washers of different flow cross-sections with offset axes of the openings.

According to one embodiment of the invention, the washers of the cartridge are made of high-strength materials, including refractory metal carbides, ceramics, hardened steels, in particular, tungsten carbide, zirconium carbide, titanium carbide, most preferably tungsten carbide.

According to one embodiment of the invention, the hydrocracking system comprises two stream supply lines from the high-pressure separator to the low-pressure separator, wherein one of these lines is a backup line.

According to one embodiment of the invention, the backup supply line is filled with the heat-transfer medium during non-use periods of one of the supply lines.

According to the second aspect of the invention there is provided a method for reducing pressure in a separation section of a hydrocracking system for petroleum feedstock according to the present invention. The method comprises the following steps: heating at least one stream supply line, which includes a reducing valve, by a heat-transfer medium to temperature T1; passing a stream with a temperature T2 through at least one supply line, wherein ΔT=T2-T1 is from about 50 to about 140°C, preferably not more than 110°C, more preferably not more than 80°C, wherein the stream is supplied to the reducing valve at a stream pressure of about 18 to about 20 MPa; and providing the passage of the stream through the reducing valve where the pressure is reduced to about 1.0-1.4 MPa, with a pressure drop imposed across the valve not exceeding 10 MPa.

According to one embodiment of the invention, the valve is flushed with the heat-transfer medium through a flushing channel in the reducing valve, which is provided between a valve body and a stuffing-box seal.

According to one embodiment of the invention, the supply line is heated sequentially, namely first to temperature T1', and then to temperature T1, wherein T1>T1'.

According to one embodiment of the invention, the heating of the stream supply line to temperature T1' is provided by an electric heater, and the heating to temperature T1 is provided by the heat-transfer medium supplied to the supply line.

According to one embodiment of the invention, one line of said at least one supply line is filled with the heat-transfer medium during non-use periods.

According to yet another aspect of the invention there is provided a pressure reducing assembly in a separation section of a combined hydrocracking system according to the invention, said assembly comprising at least one supply line comprising a reducing valve and a throttling cartridge downstream of the valve; and a heat-transfer medium feed line to a stream supply line.

According to one embodiment of the invention, the reducing valve comprises a stuffing-box with a length exceeding a plunger stroke length.

According to one embodiment of the invention, the reducing valve is equipped with a pipeline for flushing/purging and cooling a stuffing-box assembly using a heat-transfer medium, wherein the flushing/purge and cooling pipeline is in fluid communication with the heat-transfer medium feed line.

According to one embodiment of the invention, the heat-transfer medium is a liquid heat-transfer medium.

According to one embodiment of the invention, the liquid heat-transfer medium is vacuum gas oil.

According to one embodiment of the invention, the throttling cartridge comprises a set of throttling washers.

According to one embodiment of the invention, the set of throttling washers comprises from 5 to 2 washers, preferably three washers.

According to one embodiment of the invention, the throttling washers have different flow cross-sections and are characterized by axes of openings in the body that are offset relative to each other.

According to one embodiment of the invention, the material of the throttling washers is selected from high-strength materials, including refractory metals carbides, such as tungsten carbide, zirconium carbide, and titanium carbide; ceramics; and hardened steels.

All advantages provided by the invention will become clear from the following detailed description of the invention.

### BRIEF DESCRIPTION OF THE DRAWINGS

Fig. 1 shows a diagram of a hydrocracking process according to a preferred embodiment of the present invention.
Fig. 2 is a schematic diagram of a separation section according to one embodiment of the present invention.
Fig. 3 is a schematic diagram of a separation section according to another embodiment of the present invention.
Fig. 4 shows a cross-sectional view of a stuffing-box assembly in a reducing valve.
Fig. 5 shows a cross-sectional view of a throttling cartridge.

### DETAILED DESCRIPTION OF THE INVENTION

The processes in hydrocracking of residual petroleum feedstock are characterized by severe conditions at a pressure of up to 240 bar and a temperature of up to 500°C, to ensure a conversion level in the range of 88-95 wt.% for heavy hydrocarbons converted into light petroleim products. One of the critical sections in the processing line is a separation section since here the pressure is dropped from about 20 MPa to nearly an atmospheric level. More specifically, after a slurry hydrocracking section, where the reaction occurs at a pressure of 18 to 24 MPa, a stream of unconverted hydrocarbons mixed with a hydrocracking additive is directed to a vacuum unconverted residue processing section (not shown in figures), passing through the separation section, where pressure reduction essentially takes place.

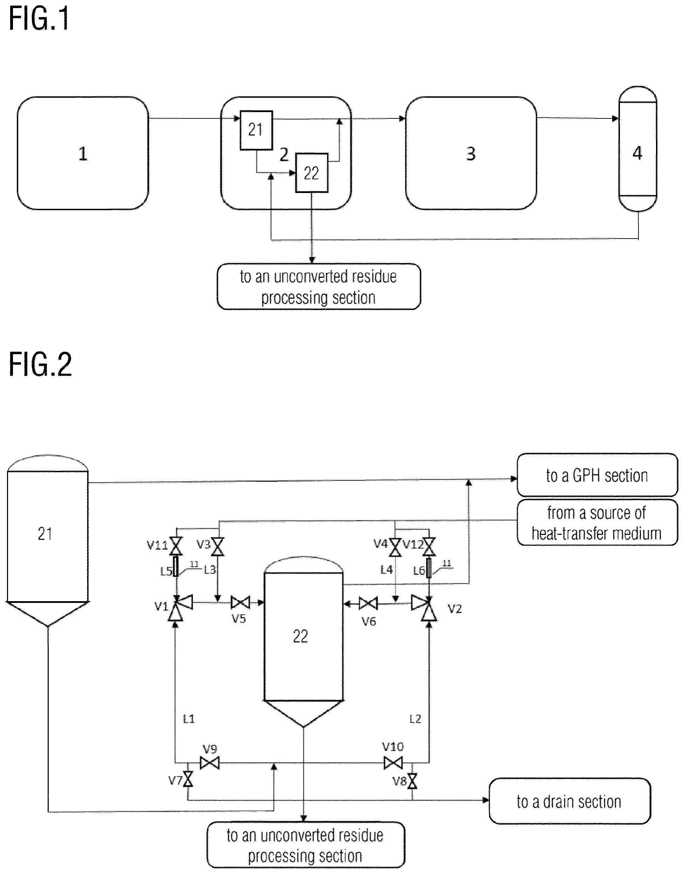

Fig. 1 schematically shows a hydrocracking system according to the present invention. The hydrocracking system includs a liquid phase hydrocracking section 1 with at least one liquid phase hydrocracking reactor arranged therein and where a heavy petroleum feedstock with an appropriate additive and/or catalyst suspended therein undergoes a hydrocracking reaction in the presence of hydrogen-containing gas; a separation section 2, where slurry, which is a mixture of an unconverted residue and a dispersed phase, is separated from gaseous products of liquid-phase hydrocracking; a gas-phase hydrocracking section 3 comprising at least one gas-phase hydrocracking reactor with a stationary catalyst bed, where hydrocracking and hydrotreating reactions occur, and a fractionation column 4 designed for fractionating an output product stream of the gas-phase hydrocracking section 3 to produce kerosene, diesel fractions and fractions of hydrotreated vacuum gas oil.

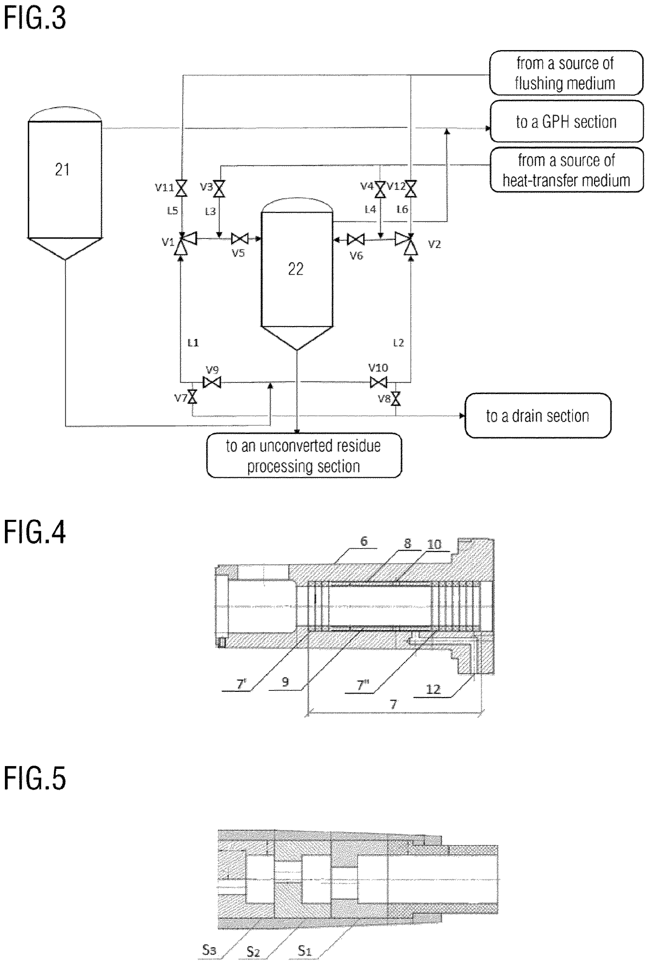

As shown in Fig. 2 or 3, the separation section 2 comprises at least one high-pressure separator 21 and at least one low-pressure separator 22, a stream supply line L1, L2 running from the high-pressure separator 21 to the low-pressure separator 22, and an angle reducing valve V1, V2 that performs two functions: reduces pressure from about 18-24 MPa to about 1.0-1.4 MPa and regulates the level in a hot high-pressure separator 21.

In the hot low-pressure separator 22, a liquid phase is separated from flash gases due to the throttling of the pressure of a bottom product supplied from the hot high-pressure separator 21.

The indicated supply line L1, L2 can have a protective high strength coating due to passing through it a stream of medium which is highly abrasive because of a high content (from 15 to 33 wt.%) of solid particles, at high pressure and temperature. The protective coating can be made of refractory metals carbides, such as tungsten, zirconium, and titanium. The most preferred coating is tungsten carbide, which is optimal for several reasons, particularly for its good surface coverage, excellent strength characteristics, and reasonable price.

The temperature T2 of a stream leaving the high-pressure separator 21 can be from about 400 to about 460°C at a pressure of from 18 to 22 MPa. In embodiments of the invention, it is preferable for inner wall of the supply line L1, L2 and, accordingly, the internal space of the valve V1, V2, to have a temperature as close as possible to this temperature T2 in order to avoid thermal shock (since thermal shock leads to cracking and destruction of the coating). When passing a stream characterized by high abrasive ability, speed and temperature, even minor damage to the coating can lead to depressurization of high-pressure circuits with the spilling of hot petroleum products in a hydrogen environment, followed by ignition. It should be noted that coating fragments, if they appear in the stream, are critical since due to their special strength, they are an additional factor of erosive wear.

To reduce the risk of destruction of the protective coating due to the tendency of refractory metal carbides, in particular tungsten carbide, to degrade due to sudden temperature changes, the stream supply lines L1, L2 can be equipped with a stepwise heating system.

In this embodiment, at the first heating step, the line is heated electrically to a temperature T1'=230-260°C. This temperature range is achieved using an electric heater. In the particular embodiment, the electric heater can be made in the form of an insulated electrical wire.

In this case, subsequent heating of line L1, L2 from temperature T1' to T1, ranging from about 320 to about 350°C, preferably not lower than 340°C, can be provided by feeding a heat-transfer medium. The heat-transfer medium is fed through a corresponding heat-transfer medium feed line L3, L4. Such a heat-transfer medium may be at least part of any of the streams of a hydrocracking assembly, in particular vacuum gas oil supplied as a feedstock to gas-phase hydrocracking, or hydrotreated vacuum gas oil.

A preferred heat-transfer medium is a liquid heat-transfer medium having a boiling point above about 360°C. This heat-transfer medium is preferably hydrotreated vacuum gas oil, which is a bottom product of a fractionation column 4 arranged after the gas-phase hydrocracking section 3. Vacuum gas oil of the fractionation column is preferred because it already has a temperature of 350-380°C at the outlet of the fractionation column and its appropriate fractionation composition prevents the hydrotreated vacuum gas oil from boiling at such temperatures, while ensuring that the supply line is flushed of deposits caused by coking or dispersed phase deposits.

The heat-transfer medium can be fed through an inlet shut-off valve V3, V4 mounted in the heat-transfer medium feed line L3, L4. The heat-transfer medium is introduced directly in front of the low-pressure separator 22 through a branch. In this case, the supply line L1, L2 comprises a valve V5, V6 mounted before the low-pressure separator 22 and just after where the heat-transfer medium is introduced, which prevents the heat-transfer medium from entering the low-pressure separator 22.

The heat-transfer medium is passed through the supply line L1, L2 via the reducing valve V1, V2, and through at least one outlet shut-off valve V7, V8 from which the heat-transfer medium is discharged into a drainage line. The flow rate of the heat-transfer medium is not more than 1 t/h. The line is heated to a temperature of 320-350°C. The flow rate of the heat-transfer medium and its fractional composition also ensures flushing of the supply line and the structural elements of the pressure reducing valve. Thus, although the heating medium stream is referred herein to as "heat-transfer medium" for conciseness, it should be appreciated that the same medium preferably also provides a flushing function.

When reaching a given temperature, which is preferably controlled using metering devices, in particular point thermometers mounted on the supply lines L1, L2, the heat-transfer medium is removed from the supply line, and the line is filled with the stream of a bottom product of the high-pressure separator 21, which is a three-phase system: gaseous products, a liquid unconverted residue, and a spent additive and/or a catalyst. Moreover, in the case of two supply lines L1, L2, one of them, either L1 or L2, is designated as a backup one. This backup line, either L1 or L2, remains in the mode described above, i.e., with hot heat-transfer medium constantly passed through it at a flow rate of not more than 1 t/hour, thus providing the heating of the internal wall of the backup line to temperature T1, which allows the line to be brought into operation quickly and without the risk of destruction.

In addition to reducing the risk of destruction due to thermal shock of the protective coating and erosive wear of the supply line, the heating of the supply line to specified temperatures reduces the risk of destruction of a stuffing-box seal 7 of the valve shown in Fig. 4. If the temperature difference between the supply line and the stream entering it is high, particularly when it exceeds 140°C, i.e., ΔT=T2-T1 >140°C, then local solidification of the medium occurs at the walls of the supply line, decreasing its speed and increasing viscosity. These effects cause stream turbulence at the valve inlet, which promotes the penetration of the dispersive phase into a gap between the stuffing-box seal and the valve body and, as a result, the destruction of the stuffing-box seal.

The angle control valve V1, V2, which is part of the supply line L1, L2, is generally a double valve comprising a body with a vertical inlet and a horizontal outlet, a plunger configured to only completely open or only completely close the stream passage through the valve. The valve body comprises a seat made in the form of a Venturi nozzle to throttle the stream. The plunger is configured to extend into the seat, completely blocking the passage of the stream through the valve, and to retract into the stuffing-box assembly of the valve, completely opening the passage of the stream through the valve.

The stuffing-box assembly shown in Fig. 4 comprises the stuffing-box seal 7, which prevents leakage and promotes cleaning of the plunger from deposits of the working medium.

In general, the dual control valve consists of two combined ports, a large port and a small port that has a smaller capacity than that of the large port. Both ports have a common inlet. The "opened" or "closed" position for each of the ports depends on the conversion degree provided in the liquid-phase reactors. At high conversion, 85-95% hydrocarbons are converted into lighter volatile fractions, and a liquid phase accumulates slowly in the high-pressure separator 21; then the level of the liquid phase, which is a slurry of the additive and/or catalyst and the unconverted residue, in the separator 21 is controlled using the small port. If the conversion is weak, the liquid phase in the high-pressure separator 21 accumulates faster, and the level of the liquid phase is controlled using the large port. Both ports can be opened to control the level, for example, at the beginning of the hydrocracking process at low conversion. Alternatively, both ports can be closed at an ultra-high hydrocarbon conversion to avoid a critical drop in the liquid level in the separator.

When the level in the separator 21 reaches a predetermined threshold upper level, a corresponding level sensor is activated. In response to the sensor signal, the large port opens. If the slurry level in the separator is decreased effectively by opening the large port, and quickly reaches a predetermined permissible upper level, then a level advising sensor is activated, and further regulation occurs through the small port, while the large port is closed. If the level does not decrease or decreases slowly, the small port of the valve additionally opens. And, conversely, if the conversion is high and the liquid phase in the separator 21 accumulates slowly, the large port is not used, the level is controlled using the small port. When the level of a predetermined threshold lower level is reached, the corresponding level sensor is triggered, and both ports are closed.

In this case, the valve can be configured to receive a signal from the sensor via a feedback channel, and the corresponding port opens/closes automatically, or the valve is regulated manually by an operator.

Thus, the conversion degree directly affects the number of valve closings/openings. To reduce the effect of the conversion degree on the number of openings/closings and for smoother operation of the reducing valve, in the present invention it is preferable that the valve capacity Cv is at least 3, preferably Cv is 4, and even more preferably Cv is 6. In one embodiment, the valve large port has Cv=6 and the small one has Cv=4.

The internal components of the reducing valve are preferably made of high-strength materials, such as refractory metal carbides, hardened steels of suitable grades, or have a protective coating of appropriate materials.

With reference to Figs 2 and 3, the reducing valve V1, V2 is connected to the supply pipeline L5, L6 for high-pressure flushing medium via a valve V11, V12. The flushing medium can be the heat-transfer medium fed for heating the supply line L1, L2, or another medium. In this case, the necessary condition is the temperature of the flushing medium, which must be lower than the auto-ignition temperature of the working medium, as discussed below.

The supply pipeline L5, L6 for flushing medium opens into the reducing valve, preferably in the stuffing-box assembly, and is designed to cool and flush the stuffing-box seal from stuffing-box wear products, particles of the slurry phase stream and coking deposits.

The stuffing-box assembly of the valve is equipped with an outlet (not shown in figures) for the flushing medium to flow into a drain section.

With reference to Fig. 4, the supply pipeline L5, L6 for flushing medium opens into the reducing valve through a supply channel 12, preferably in the stuffing-box assembly, and a flushing channel 8 is provided between the valve body 6 and the stuffing-box seal 7, and the stuffing-box seal comprises a metal sleeve 9 separating the seal into two parts 7' and 7", wherein the sleeve 9 comprises at least two, preferably at least four, even more preferably six through holes 10 providing the passage of the flushing medium to the internal space of the stuffing-box assembly of the valve. Thus, the stagnant zone of the stuffing-box seal and the flushing channel 8 between the metal sleeve 9 and the inner wall of the valve body 6 are flushed. This design is also advantageous because it prevents medium ignition due to leakage through the stuffing-box since the flushing medium is not only an agent for cleaning the seal, but also for creating a temperature barrier so that a possible leakage is guaranteed to have a temperature below the auto-ignition point.

Preferably, immediately before putting the valve V1, V2 into operation, the flushing medium is supplied to the stuffing-box seal area at a temperature that ensures a decrease in the temperature of the working medium below its auto-ignition point, namely in the present invention, the temperature of the flushing medium in the stuffing-box should not exceed 190°C, preferably is in the range of 180 to 186°C. The flushing medium can be any hydrocarbon fluid capable of flushing the stuffing-box seal and adjacent parts of the valve from adhering particles of the slurry phase, particles from stuffing-box wear, and coking deposits. Preferably, the flushing medium is vacuum gas oil.

The vacuum gas oil for flushing the stuffing-box can be supplied, particularly, from a feedstock tank for a gas-phase hydrocracking reactor, or from any other source of vacuum gas oil. This option is shown in Fig. 3. In this case, it is necessary to take into account the temperature limitation of the vacuum gas oil supplied for flushing the stuffing-box and the fractional composition that ensures no boiling at the temperature inside the valve.

In the particular embodiment, the flushing medium is hydrotreated vacuum gas oil, which is partially removed from the heat-transfer medium feed line L3, L4. Before the insertion point of the pipeline L5, L6 into the stuffing-box assembly of the valve, a refrigerator 11 is provided.

To avoid leakages through the stuffing-box assembly, the pressure of the flushing vacuum gas oil should preferably be 1-1.5 MPa higher than the pressure of the working medium in the line from the high-pressure separator 21 to the valve V1, V2, in particular, should range from 19.8 to 22.0 MPa. In this case, the flushing medium acts as a water seal. To ensure the water seal function, the flow rate of the flushing medium must increase as the stuffing-box wears.

Preferably, the length of the stuffing-box seal does not exceed the stroke length of the valve plunger.

This is preferred because the risk of the stuffing-box being torn off by the plunger is reduced. The risk of the stuffing-box being torn off is associated with the fact that the plunger head, which is heated up from the temperature of the working medium that passes in the gap between the valve seat and the plunger head at a high speed, temperature, and pressure, can drag away the stuffing-box during its working stroke through it. This is due to the adhesion of the stuffing-box material to the plunger. This, in turn, can lead to the ignition of the working medium if there is leakage through the stuffing-box since at atmospheric pressure and in the presence of dissolved hydrogen, the temperature of the working medium exceeds the auto-ignition temperature.

Thus, the length of the stuffing-box, which is less than the plunger stroke length, allows keeping the stuffing-box inside the seal, thereby preventing the stuffing-box from being torn off even if it sticks to the plunger.

In the particular embodiment, shown in Fig. 4, the seal is divided into two parts 7' and 7" with the length of each part less than the plunger stroke length, while a primary seal 7' serves not only for tightness, but also cleans the plunger from possible sticking of working medium products. As the primary seal wears out, it could be a cause of leakage of the flushing medium into the working medium. Thus, it is preferable that the fractional composition of the flushing medium be close to the fractional composition of the working medium. A secondary seal 7" completely seals the stuffing-box assembly. Due to the flushing medium, the temperature of the secondary seal 7" is significantly lower than the temperature of the working medium and the auto-ignition point, which in the present invention is about 200°C at atmospheric pressure and in the presence of dissolved hydrogen.

As noted above, while providing a reduction in pressure from about 18-24 MPa to about 1.0-1.4 MPa, the valve V1, V2 at the outlet is subject to a significant pressure drop. When the pressure drop is above 15 MPa, the working medium stream passes through the gap between the seat and the valve plunger at a very high speed and boils, which ultimately, given the large number of abrasive particles, leads to both the destruction of the valve internal components and their erosive wear and erosive wear of the downstream pipeline.

In an effort to make the operation of the hydrocracking system more reliable, the authors of the invention designed a device to reduce the pressure drop across the pressure reducing valve. More specifically and with reference to Fig. 5, according to the present invention, a throttling cartridge 12 is preferably mounted at the outlet of the valve, this cartridge helps to reduce a sudden pressure drop, which in traditional technical solutions exceeds 15 MPa. In one of embodiment, the throttling cartridge is made in the form of a set of throttling washers Si, S₂, and S₃ of a special design, which are made of high-strength materials, such as refractory metals carbides, in particular, tungsten, zirconium, and titanium; ceramics; and hardened steels, and have various flow cross-sections with offset axes of openings in the body.

The cartridge comprises washers, each having a variable flow cross-section, wherein on the inlet side, the diameter of the flow cross-section exceeds the diameter of the flow cross-section on the outlet side. The transition area from the larger to the smaller diameter forms a discrete protrusion in the washer. In this case, the flow cross-section of a larger diameter is preferably not coaxial with the flow cross-section of a smaller diameter.

Thus, each washer has an inlet opening with a large diameter and an outlet opening with a smaller diameter, with a discrete protrusion formed approximately in the middle of the length of the flow cross-section.

Preferably, the diameter of the larger flow cross-section is 2-3 times larger than the diameter of the smaller flow cross-section.

Preferably, the inlet openings of all washers are coaxial with the axis of the cartridge rather than with each other, and preferably the outlet openings are coaxial with neither the axis of the cartridge nor with each other. In this case, the diameters of the inlet openings of each of the washers are the same, and the diameters of the outlet openings of each of the washers are different. Thus, the cartridge defines projections of variable height.

Preferably, the cartridge contains from 5 to 2 washers, even more preferably three washers.

Passing through the cartridge, the stream slows down, hitting protrusions of variable height.

Thus, by reducing the linear flow rate, it is possible to reduce the pressure drop across the reducing valve to between 10 and 8 MPa, which in turn leads to preventing an increase in the temperature of the slurry in the valve, and, consequently, preventing boiling of the liquid phase. These positive effects are advantageous in reducing erosive wear and the risk of adhesion of unconverted residue products, such as asphaltenes, carbenes, carboids, and other heavy hydrocarbons, to the valve elements.

Furthermore, by reducing the pressure drop and preventing boiling of the working medium, it is possible to avoid excessive heating of the plunger head, which in turn predominantly helps to prevent the stuffing-box seal 7 from being torn off due to the adhesion of the material of the stuffing-box seal 7 to the valve plunger.

In this case, as mentioned above, fragments of the protective coating made of high-strength materials are an additional factor in the erosive wear of devices downstream of the valve. Thanks to the proposed design of the throttling cartridge, coating fragments can be retained by protrusions provided by washer bodies with offset axes and different diameters of through openings.

The fact that the cartridge design is prefabricated ensures maintainability and element-by-element replacement of washers.

Furthermore, the throttling cartridge of the proposed design is predominantly not clogged with the dispersion phase of the slurry, allowing the stream to pass freely.

An assembly comprising the stream supply line L1, L2 with the reducing valve V1, V2 and the throttling cartridge, mounted therein, and the heat-transfer medium feed line L3, L3 is designated in the present application as a reducing assembly.

Preferably, the reducing assembly also includes the supply pipeline L5, L6 for the flushing medium for the stuffing-box seal.

The proposed design, with all the advantages described above, enables an increase in the reliability of the entire hydrocracking system, ensuring its stable non-stop operation and increasing the turnaround time.

According to the present invention, the stability of operation of the combined hydrocracking assembly means continuous operation in established modes with a given productivity.

### Example

The system operates as follows.

Tar with a flow rate of 185 t/h was mixed with a carbon additive in an amount of about 1.5% based on the weight of tar. This slurry was fed to a slurry hydrocracking section comprising three liquid-phase hydrocracking reactors, where the hydrocracking reaction occurred in the presence of hydrogen gas at a pressure of 20 MPa and a temperature of 460°C. From the outlet of the last reactor of the GPH section, liquid-phase hydrocracking products entered a high-pressure separator, where gaseous products were separated from slurry due to throttling. Gaseous products were directed to a second high-pressure separator and then to a gas-phase hydrocracking section. The slurry, accumulated in a bottom conical part of the high-pressure separator, was discharged through a pressure reducing assembly, which included a stream supply line, into a low-pressure separator.

A supply line L1, L2 was preheated in a stepwise manner: first, it was heated electrically to 250°C, and then heated to 350°C using hydrotreated vacuum gas oil. The hydrotreated vacuum gas oil was fed from a fractionation column arranged after the gas-phase hydrocracking section.

The line L1, L2 was heated as follows: once reaching the first heating temperature of 250°C, hydrotreated vacuum gas oil, having a temperature of about 360°C, was fed through heat-transfer medium feed lines L3, L4. To do this, valves V3 and V4 were opened, while valves V5, V6, V9, and V10 were closed. The hydrotreated vacuum gas oil passed through two stream supply lines and flowed out through drain valves V7, V8 until the wall of the stream supply line L1, L2 reached a temperature of 350°C. Upon reaching the specified temperature, one of the heat-transfer medium feed lines, L3, was shut off by closing the valve V3. The supply line L1 for a stream was then drained, and the drain valve V7 was closed. The slurry stream supply valve V9 in the high-pressure separator was opened, and the stream passed through the stream supply line L1. The slurry stream had a temperature of 450°C and a pressure of 20 MPa. The second line L2 serves as a backup and remains filled with hydrotreated vacuum gas oil, which continuously streamed through it to the drain section.

When passing through the reducing valve V1, the slurry stream was throttled first at the outlet of the valve seat, which was shaped like a Venturi nozzle and then in the throttling cartridge mounted immediately after the valve. Thus, a two-step gradual pressure reduction allowed the pressure drop across the valve to be reduced as much as possible. The pressure drop across the valve was measured with a local pressure gauge and was approximately 8 MPa.

Vacuum gas oil, running from a feedstock tank of gas-phase hydrocracking and having a temperature of about 90°C, was supplied to a stuffing-box of the reducing valve V1, while flushing and cooling a stuffing-box seal.

When the system operated in the manner described above, no leakages were observed through the stuffing-box during the entire period of operation from one scheduled repair to the next.

During the scheduled repairs, no damage was recorded on the stuffing-box and the internal coating of the valve, including a plunger.

The hydrocracking system according to the present invention is characterized by stable, non-stop operation. According to the present invention, the stability of the hydrocracking system is understood as continuous operation for at least 4 months in established modes with a given performance.

Industrial tests have shown that the present hydrocracking system is characterized by stable operation during the entire period between scheduled remedial maintenance and provides a feedstock capacity, particularly for tar, of up to 2.6 million tons per year.

## Claims

1. A hydrocracking system for petroleum feedstock, comprising:
- a liquid-phase hydrocracking (LPH) section comprising at least one LPH reactor;
- a gas-phase hydrocracking (GPH) section comprising at least one GPH reactor;
- a separation section between the LPH section and the GPH section, including at least one high-pressure separator, and at least one low-pressure separator, as well as at least one stream supply line from the high-pressure separator to the low-pressure separator, wherein said at least one stream supply line comprises a reducing valve and a throttling cartridge arranged in the supply line downstream of the reducing valve;
- a heat-transfer medium feed line to the stream supply line and the reducing valve.

2. The hydrocracking system according to claim 1, wherein said at least one high-pressure separator operates at a pressure in the range of about 18 MPa to about 24 MPa.

3. The hydrocracking system according to claim 1, wherein said at least one low-pressure separator operates at a pressure of from about 1.0 MPa to about 1.4 MPa.

4. The hydrocracking system according to claim 1, wherein the reducing valve is configured to reduce the pressure of a stream, wherein a pressure drop across the reducing valve does not exceed 10 MPa.

5. The hydrocracking system according to claim 1, wherein the stream supply line is further equipped with an electric heater.

6. The hydrocracking system according to claim 5, wherein the supply line is configured to be heated to a temperature T1, and the stream received in the supply line has a temperature T2, wherein ΔT=T2-T1 is from about 50 to about 140°C, preferably not more than 110°C, preferably not more than 80°C.

7. The hydrocracking system according to claim 6, wherein the heating of said at least one supply line is provided in a stepwise manner, namely, first by the electric heater providing the heating of the supply line to a temperature T1', and then by a heat-transfer medium providing the heating of the supply line to the temperature T1, and T1 >T1', wherein the T1' is 230-250°C.

8. The hydrocracking system according to claim 1, wherein the heat-transfer medium is a liquid heat-transfer medium, and the temperature provided by the heat-transfer medium for heating the line is T1=320-350°C.

9. The hydrocracking system according to claim 8, wherein the liquid heat-transfer medium is hydrotreated vacuum gas oil.

10. The hydrocracking system according to claim 9, wherein a fractionation section comprising a fractionation column is arranged downstream of the GPH section, wherein hydrotreated vacuum gas oil fed through the liquid heat-transfer medium feed line is supplied from said fractionation column.

11. The hydrocracking system of claim 1, wherein said at least one supply line comprises an internal coating of a refractory metal carbide.

12. The hydrocracking system according to claim 1, wherein the reducing valve has an internal coating of a refractory metal carbide.

13. The hydrocracking system according to claim 1, wherein the throttling cartridge comprises a set of throttling washers of a variable flow cross-section, and an axis of a washer outlet opening is offset relative to an axis of an inlet opening thereof.

14. The hydrocracking system according to claim 1, wherein the washers of the throttling cartridge are made of high-strength material, in particular, ceramics, hardened steels, and refractory metal carbides.

15. The hydrocracking system according to any one of claims 11, 12 or 14, wherein the refractory metal carbide is selected from the group consisting of tungsten carbide, zirconium carbide, and titanium carbide.

16. The hydrocracking system of claim 1, comprising two stream supply lines running from the high-pressure separator to the low-pressure separator, wherein one of these supply lines is a backup line.

17. The hydrocracking system according to claim 16, wherein the backup supply line is filled with the heat-transfer medium.

18. The hydrocracking system according to claim 1, wherein the reducing valve is equipped with a pipeline for a flushing medium.

19. The hydrocracking system according to claim 18, wherein the reducing valve comprises a stuffing-box assembly, and the flushing medium enters the stuffing-box assembly of the reducing valve.

20. The hydrocracking system according to claim 18, wherein the flushing medium is the heat-transfer medium.

21. The hydrocracking system according to claim 18, wherein the flushing medium is different from the heat-transfer medium.

22. The hydrocracking system according to claim 18, wherein the flushing medium has a temperature that ensures a temperature of leakage through the stuffing-box below an auto-ignition point.

23. A method for reducing pressure in a separation section of a hydrocracking system for petroleum feedstock according to claim 1, comprising the following steps:
- heating at least one stream supply line, which comprises a reducing valve, with a heat-transfer medium to a temperature T1;
- passing a stream with a temperature T2 through said at least one supply line, wherein ΔT=T2-T1 is from about 50 to about 140°C, preferably not more than 110°C, more preferably not more than 80°C, wherein the stream is supplied to the reducing valve at a stream pressure of about 18 to about 20 MPa;
- providing the passage of the stream through the reducing valve where the pressure is reduced to about 1.0-1.4 MPa, with a pressure drop imposed across the valve not exceeding 10 MPa.

24. The method according to claim 23, wherein the reducing valve comprises a stuffing-box seal and a flushing channel provided between a body of the reducing valve and the stuffing-box seal, wherein the reducing valve is equipped with a flushing medium supply pipeline for cooling and flushing the stuffing-box seal, wherein a flushing medium is fed through the flushing medium supply pipeline to the stuffing-box seal via the flushing channel.

25. The method according to claim 23, wherein the supply line is heated stepwise, namely, first to a temperature T1' and then to a temperature T1, wherein T1>T1'.

26. The method according to claim 23, wherein the heating of the stream supply line to the temperature T1' is provided by electrical heating, and the heating to temperature T1 is provided by the heat-transfer medium supplied to the supply line.

27. The method according to claim 23, wherein one line of said at least one supply line is filled with the heat-transfer medium during non-use periods.

28. A pressure reducing assembly in a separation section of a combined hydrocracking system according to any one of claims 1-22, comprising:
- at least one supply line comprising a reducing valve and a throttling cartridge downstream of the valve configured to provide a pressure drop across the reducing valve not exceeding 10 MPa, wherein the throttling cartridge comprises a set of throttling washers;
- a heat-transfer medium feed line to the stream supply line, wherein the stream supply line is configured to be heated by a heat-transfer medium entering the stream supply line.

29. The assembly according to claim 28, wherein the reducing valve comprises a stuffing-box assembly and a plunger configured to be retracted into the stuffing-box assembly of the valve, wherein the stuffing-box assembly comprises a stuffing-box seal with a length that does not exceed a stroke length of the plunger.

30. The assembly according to claim 29, wherein the stuffing-box seal is made in the form of two consecutive parts of the stuffing-box seal, with the length of each part not exceeding the stroke length of the plunger.

31. The assembly according to claim 29, further comprising a supply pipeline for flushing medium, configured to supply the flushing medium to the stuffing-box assembly of the reducing valve.

32. The assembly according to claim 31, wherein the flushing medium is vacuum gas oil.

33. The assembly according to claim 28, wherein the heat-transfer medium is a liquid heat-transfer medium.

34. The assembly according to claim 33, wherein the liquid heat-transfer medium is hydrotreated vacuum gas oil.

35. The assembly according to claim 28, wherein the set of throttling washers comprises from 5 to 2 washers, preferably three washers.

36. The assembly according to claim 28, wherein the throttling washers have a variable flow cross-section, and an inlet opening of a washer has a larger diameter than an outlet opening.

37. The assembly according to claim 28, wherein an axis of the outlet opening of the washer is offset relative to the axis of the inlet opening thereof.

38. The assembly according to claim 28, wherein the inlet openings of each washer are coaxial with each other and with an axis of the cartridge, while the outlet openings are coaxial neither with each other nor with the axis of the cartridge.

39. The assembly according to claim 28, wherein the material of the throttling washers is selected from high-strength materials, in particular, refractory metals carbides, such as tungsten carbide, zirconium carbide, and titanium carbide; ceramics; and hardened steels.

## Amended claims

### Amended claims in accordance with Rule 137(2) EPC.

1. A hydrocracking system for petroleum feedstock, comprising:
- a liquid-phase hydrocracking (LPH) section comprising at least one LPH reactor;
- a gas-phase hydrocracking (GPH) section comprising at least one GPH reactor;
- a separation section between the LPH section and the GPH section, including at least one high-pressure separator, and at least one low-pressure separator, as well as at least one stream supply line from the high-pressure separator to the low-pressure separator, wherein said at least one stream supply line comprises a reducing valve and a throttling cartridge arranged in the supply line downstream of the reducing valve;
- a heat-transfer medium feed line to the stream supply line and the reducing valve.

2. The hydrocracking system according to claim 1, wherein said at least one high-pressure separator operates at a pressure in the range of about 18 MPa to about 24 MPa, wherein said at least one low-pressure separator operates at a pressure of from about 1.0 MPa to about 1.4 MPa, and wherein the reducing valve is configured to reduce the pressure of a stream, wherein a pressure drop across the reducing valve does not exceed 10 MPa.

3. The hydrocracking system according to claim 1, wherein the stream supply line is further equipped with an electric heater, wherein the supply line is configured to be heated to a temperature T1, and the stream received in the supply line has a temperature T2, wherein ΔT=T2-T1 is from about 50 to about 140°C, preferably not more than 110°C, preferably not more than 80°C, and wherein the heating of said at least one supply line is provided in a stepwise manner, namely, first by the electric heater providing the heating of the supply line to a temperature T1', and then by a heat-transfer medium providing the heating of the supply line to the temperature T1, and T1>T1', wherein the T1' is 230-250°C.

4. The hydrocracking system according to claim 1, wherein the heat-transfer medium is a liquid heat-transfer medium, and the temperature provided by the heat-transfer medium for heating the line is T1=320-350°C, wherein the liquid heat-transfer medium is hydrotreated vacuum gas oil, and wherein a fractionation section comprising a fractionation column is arranged downstream of the GPH section, wherein hydrotreated vacuum gas oil fed through the liquid heat-transfer medium feed line is supplied from said fractionation column.

5. The hydrocracking system of claim 1, wherein said at least one supply line comprises an internal coating of a refractory metal carbide, and wherein the reducing valve has an internal coating of a refractory metal carbide, wherein the refractory metal carbide is selected from the group consisting of tungsten carbide, zirconium carbide, and titanium carbide.

6. The hydrocracking system according to claim 1, wherein the throttling cartridge comprises a set of throttling washers of a variable flow cross-section, and an axis of a washer outlet opening is offset relative to an axis of an inlet opening thereof, wherein the washers of the throttling cartridge are made of high-strength material, in particular, ceramics, hardened steels, and refractory metal carbides, wherein the refractory metal carbide is selected from the group consisting of tungsten carbide, zirconium carbide, and titanium carbide.

7. The hydrocracking system of claim 1, comprising two stream supply lines running from the high-pressure separator to the low-pressure separator, wherein one of these supply lines is a backup line, and wherein the backup supply line is filled with the heat-transfer medium.

8. The hydrocracking system according to claim 1, wherein the reducing valve is equipped with a pipeline for a flushing medium, wherein the reducing valve comprises a stuffing-box assembly, and the flushing medium enters the stuffing-box assembly of the reducing valve, wherein the flushing medium is the heat-transfer medium or is different from the heat-transfer medium, and wherein the flushing medium has a temperature that ensures a temperature of leakage through the stuffing-box below an auto-ignition point.

9. A method for reducing pressure in a separation section of a hydrocracking system for petroleum feedstock according to claim 1, comprising the following steps:
- heating at least one stream supply line, which comprises a reducing valve, with a heat-transfer medium to a temperature T1;
- passing a stream with a temperature T2 through said at least one supply line, wherein ΔT=T2-T1 is from about 50 to about 140°C, preferably not more than 110°C, more preferably not more than 80°C, wherein the stream is supplied to the reducing valve at a stream pressure of about 18 to about 20 MPa;
- providing the passage of the stream through the reducing valve where the pressure is reduced to about 1.0-1.4 MPa, with a pressure drop imposed across the valve not exceeding 10 MPa.

10. The method according to claim 9, wherein the reducing valve comprises a stuffing-box seal and a flushing channel provided between a body of the reducing valve and the stuffing-box seal, wherein the reducing valve is equipped with a flushing medium supply pipeline for cooling and flushing the stuffing-box seal, wherein a flushing medium is fed through the flushing medium supply pipeline to the stuffing-box seal via the flushing channel, wherein the supply line is heated stepwise, namely, first to a temperature T1' and then to a temperature T1, wherein T1>T1, and wherein the heating of the stream supply line to the temperature T1' is provided by electrical heating, and the heating to temperature T1 is provided by the heat-transfer medium supplied to the supply line.

11. The method according to claim 9, wherein one line of said at least one supply line is filled with the heat-transfer medium during non-use periods.

12. A pressure reducing assembly in a separation section of a combined hydrocracking system according to any one of claims 1-11, comprising:
- at least one supply line comprising a reducing valve and a throttling cartridge downstream of the valve configured to provide a pressure drop across the reducing valve not exceeding 10 MPa, wherein the throttling cartridge comprises a set of throttling washers;
- a heat-transfer medium feed line to the stream supply line, wherein the stream supply line is configured to be heated by a heat-transfer medium entering the stream supply line.

13. The assembly according to claim 12, wherein the reducing valve comprises a stuffing-box assembly and a plunger configured to be retracted into the stuffing-box assembly of the valve, wherein the stuffing-box assembly comprises a stuffing-box seal with a length that does not exceed a stroke length of the plunger, wherein the stuffing-box seal is made in the form of two consecutive parts of the stuffing-box seal, with the length of each part not exceeding the stroke length of the plunger, wherein the assembly further comprises a supply pipeline for flushing medium, configured to supply the flushing medium to the stuffing-box assembly of the reducing valve, and wherein the flushing medium is vacuum gas oil and the heat-transfer medium is a liquid heat-transfer medium or hydrotreated vacuum gas oil.

14. The assembly according to claim 12, wherein the set of throttling washers comprises from 5 to 2 washers, preferably three washers, wherein the throttling washers have a variable flow cross-section, and an inlet opening of a washer has a larger diameter than an outlet opening, and wherein the material of the throttling washers is selected from high-strength materials, in particular, refractory metals carbides, such as tungsten carbide, zirconium carbide, and titanium carbide; ceramics; and hardened steels.

15. The assembly according to claim 12, wherein an axis of the outlet opening of the washer is offset relative to the axis of the inlet opening thereof, wherein the inlet openings of each washer are coaxial with each other and with an axis of the cartridge, while the outlet openings are coaxial neither with each other nor with the axis of the cartridge.
